# EUROPÄISCHE PATENTSCHRIFT

(11) **EP 3 786 603 B1**
(45) Veröffentlichungstag und Bekanntmachung des Hinweises auf die Patenterteilung: **05.07.2023**
(21) Anmeldenummer: 20190825.8
(22) Anmeldetag: 13.08.2020
(51) Int. Cl.: G01M 3/28

(54) **ÜBERWACHUNG EINER HAUSWASSERINSTALLATION**
MONITORING OF A DOMESTIC WATER INSTALLATION
SURVEILLANCE D'UNE INSTALLATION D'EAU DOMESTIQUE

(30) Priorität: 30.08.2019 DE 102019123268
(43) Veröffentlichungstag der Anmeldung: 03.03.2021
(73) Patentinhaber: Judo Wasseraufbereitung GmbH, 71364 Winnenden (DE)
(72) Erfinder: Brocke, Sebastian, 71642 Ludwigsburg (DE); Massa, Eckard, 71720 Oberstenfeld-Gronau (DE)
(74) Vertreter: Kohler Schmid Möbus Patentanwälte

(56) Entgegenhaltungen:
- WO-A1-2019/052893
- DE-A1-102017 005 499
- DE-A1-102017 117 652
- US-A1- 2008 251 131

## Beschreibung

Die Erfindung betrifft Verfahren zur Überwachung einer Hauswasserinstallation, insbesondere einer Wasserbehandlungsanlage nach Anspruch 1. Außerdem betrifft die Erfindung auch eine Hauswasser-installation, insbesondere eine Wasserbehandlungsanlage, zur Durchführung eines derartigen Verfahrens. Ein solches Verfahren ist bekannt aus DE 10 2017 005 499 A1 (=Referenz [0]) oder aus WO 2019/052893 A1 (=Referenz [6b]).

Hauswasserinstallationen, insbesondere Wasserbehandlungsanlagen, werden aus vielfältigen Gründen und weit verbreitet in Haushalten oder auch in technischen Anlagen eingesetzt. Oftmals wird nämlich behandeltes, insbesondere enthärtetes und/oder filtriertes Wasser gewünscht oder benötigt. Üblicherweise werden dafür Wasserenthärtungsanlagen und/oder Wasserfilter eingesetzt, vor allem bei Trinkwasserinstallationen.

An den Rohren und Armaturen, die ausgehend von derartigen Hauswasserinstallationen in die einzelnen Räume des betreffenden Hauses oder auch auf die Terrasse oder in den Garten geführt sind, können unter widrigen Umständen Leckagen entstehen, welche außer zu Wasserverlust noch zu erheblichen weiteren Schäden führen können. Diese gilt es zu vermeiden oder wenigstens zu minimieren.

DE 10 2011 055 642 B4, WO 2006/069930 A2 und DE 10 2012 211 132 A1 (=Referenzen [2a-c]) beschreiben Verfahren zur Erkennung von Leckagen und Vermeidung von Schäden durch Leckagen. Dabei werden Durchflüsse im Wasserzulauf und in der Nähe der einzelnen Entnahmestellen verglichen. Bei Unstimmigkeiten wird eine Absperrvorrichtung im Zulauf geschlossen bzw. ein Alarmsignal ausgegeben. Mit steigender Anzahl von Entnahmestellen werden entsprechend viele Durchflussmesser benötigt, was zu erhöhten Kosten, höherem Platzbedarf für die Anlage sowie größerer Ausfall- und Reparaturanfälligkeit führt.

Für die Erfassung der Zustände an den Entnahmestellen sind in DE 20 2015 002 251 U1 und DE 199 44 830 A1 (=Referenzen [3a,b]) Zustandssensoren an den Wasserauslässen vorgesehen, die allgemein prüfen, ob ein Wasserauslass geöffnet wurde oder nicht.

DE 198 35 621 C1 und US 2002/0088491 A1 (=Referenzen [4a,b]) sehen vor, dass bei einer Differenz zwischen der eingespeisten und der entnommenen Fluidmenge je nach Größe der Differenz unterschiedliche Maßnahmen eingeleitet werden, beispielsweise eine Absperrung einzelner Entnahmestellen oder des gesamten Systems bzw. die Freigabe einer begrenzten Entnahmedauer oder auch eine sofortige Absperrung der Hauptleitung.

DE 196 08 527 C2 und EP 0 794 381 B1 (=Referenzen [5a,b]) offenbaren eine Wasserschaden-Schutzvorrichtung, bei der ein Verschlussorgan in einer zentralen Zuleitung automatisch schließt, wenn entweder ein im Bodenbereich angeordneter Feuchtigkeitssensor Feuchtigkeit feststellt oder ein zentrales Volumenstrommessgerät eine Grenzwertüberschreitung registriert.

DE 10 2017 121 489 B4 und WO 2019/052893 A1 (=Referenzen [6a,b]) stellen ein Verfahren zur Detektion einer Leckage vor, bei dem ein Alarmwert an die auftretenden Flüssigkeitsentnahme-vorgänge angepasst wird. Dabei gilt zu einem bestimmten Zeitpunkt immer nur ein Grenzwert ("Alarmwert"), egal ob gerade eine Wasserentnahme erfolgt oder nicht. Dieser eine Alarmwert wird für die zukünftige Überwachung angepasst, wenn in der Vergangenheit bei vielen Entnahmen (z.B. mindestens 10) ein bestimmter Wert ("Anpassungswert") häufig überschritten wird (Alarmwert wird vergrößert) oder (fast) nie überschritten wird (Alarmwert wird verkleinert).

DE 195 08 114 C2 und EP 0 731 313 B1 (=Referenzen [7a,b]) beschreiben ein Verfahren zum Betrieb einer Wasserschadenschutzvorrichtung, bei welchem nach Überschreiten eines Grenzwerts für eine maximal zulässige Wasserentnahme zwar die Wasserzuleitung einer Anlage abgesperrt wird. Nach kurzer Zeit soll jedoch -quasi probehalber- die Leitung automatisch wieder geöffnet und dann dauerhaft offengehalten werden, wenn man festgestellt, dass der Grenzwert jetzt wieder zuverlässig unterschritten wird.

DE 10 2017 117 652 A1 (=Referenz [1]) beschreibt eine Vorrichtung und ein Verfahren, bei welchen ein in einer Zuleitung detektierter Wasserdurchfluss auf Plausibilität im Hinblick auf den Betätigungszustand der Wasserverbraucher geprüft wird. In diesem Zusammenhang ist in Referenz [1] von einer -offenbar fest vorgegebenen- Normal-Fließgeschwindigkeit die Rede, welche gemäß der Beschreibung und Ansprüche nach einer Plausibilitäts-Vorschrift ermittelt und dem jeweils detektierten Betätigungszustand zugeordnet, vom Betätigungszustand der Wasserverbraucher abgeleitet bzw. auf das Verbrauchsverhalten der Wasserverbraucher zurückgehend von einem zu messenden Wasserdruck abhängig ermittelt beziehungsweise basierend auf einem Strömungsmodell des Gebäude-Trinkwassernetzwerkes berechnet und in einem Lernvorgang einem Steuersystem eingelernt werden soll.

Die erforderliche Plausibilitäts-Vorschrift ist in Referenz [1] allerdings lediglich allgemein beschrieben, konkrete Schließ-Kriterien werden dabei jedoch nicht genannt. Als ein Grenzwert -möglicherweise im Sinne des eingangs definierten ersten Grenzwerts GW1- wird der Wert "Null" angegeben oder ein nicht näher ausgeführter Wert der detektierten Fließgeschwindigkeit. Demnach soll die detektierte Fließgeschwindigkeit nur dann als "plausibel" eingestuft werden, wenn sie "unterhalb eines vorbestimmten Wertes liegt oder Null ist". Offenbar muss also gemäß Referenz [1] der Grenzwert nicht zwangsläufig kleiner als die Normal-Fließgeschwindigkeit sein. Die Normal-Fließgeschwindigkeit wird unter Berücksichtigung des Betätigungszustands sämtlicher Wasserverbraucher -mit und ohne Sensor- ermittelt. Der Betätigungszustand der Wasserverbraucher ohne Sensor muss dabei zusätzlich abgeleitet bzw. eingegeben werden, was einen erheblichen Aufwand erfordert. Die in Referenz [1] beschriebenen Alternativen (Wasserdruck messen, über ein Strömungsmodell des Gebäude-Trinkwassernetzwerk berechnen oder in einem Lernvorgang einlernen) erscheinen aufwändig und ziemlich umständlich. Die derart ermittelte Normal-Fließgeschwindigkeit hängt von der Gesamtzahl der betätigten Wasserverbraucher, keinesfalls jedoch von deren Art und Einsatzort ab.

Eine Hauptschwierigkeit bei bekannten Leckageschutz-Systemen ist die sichere Unterscheidung zwischen ungewünschten Leckagen und regulären Wasserentnahmen. Bei einem Fehlalarm und dem daraufhin erfolgenden Schließen einer Absperrvorrichtung im Zulauf wird die Wasserversorgung in der gesamten nachfolgenden Installation unterbrochen, was zu gravierenden Problemen führen kann. Wird dagegen eine tatsächliche Leckage mit einer gewollt stattfindenden Wasserentnahme verwechselt und die Wasserzufuhr deswegen nicht sofort abgesperrt, so kann dies möglicherweise ganz erhebliche Wasserschäden zur Folge haben, die aber eigentlich vermeidbar gewesen wären.

### Aufgabe der Erfindung

Demgegenüber ist es Aufgabe der vorliegenden Erfindung, ein Verfahren beziehungsweise eine Vorrichtung zur Überwachung einer Hauswasserinstallation der eingangs definierten Art auf technisch möglichst einfache und kostengünstige Weise so zu modifizieren, dass damit eine -ungewünscht stattfindende- Leckage von einer -gewollten- regulären Wasserentnahme in dem von der Hauswasserinstallation bedienten Betriebsbereich mit hoher, automatisch angepasster Zuverlässigkeit unterschieden werden kann.

### Kurze Beschreibung der Erfindung

Diese Aufgabe wird erfindungsgemäß durch ein Verfahren zur Überwachung einer Hauswasserinstallation der eingangs genannten Art gelöst, welches dadurch gekennzeichnet ist, dass der zweite Grenzwert GW2 für eine Zapfstelle durch den ersten Grenzwert GW1 ersetzt wird, wenn ein Sensor erfasst, dass der aktuelle Zustand der zugehörigen Zapfstelle keine Wasserentnahme signalisiert, beziehungsweise wenn die Ventileinrichtung der Zapfstelle geschlossen ist.

Es wird also automatisch vom zweiten Grenzwert GW2 zum strengeren ersten Grenzwert GW1 zurückgekehrt, wenn die Sensoren erfassen, dass die Zapfstellen geschlossen sind bzw. keine Wasserentnahme mehr stattfindet.

Es kann sofort, d.h. zeitlich unmittelbar, zum ersten Grenzwert GW1 gewechselt werden, sobald die Sensoren erfassen, dass die Wasserentnahme beendet ist. Alternativ kann aber auch erst nach einer bestimmten Zeit ohne Wasserentnahme zum Grenzwert GW1 gewechselt werden, beispielsweise nach einer Minute.

Während etwa in Referenz [1] lediglich eine Normal-Fließgeschwindigkeit aus dem Betätigungszustand sämtlicher Wasserverbraucher, also auch derjenigen ohne Sensor, ermittelt und mittels nicht näher festgelegter Kriterien auf Plausibilität geprüft wird, schreibt die vorliegende Erfindung vor, den ersten Grenzwert GW1 in der elektronischen Steuervorrichtung zu speichern oder von dieser abfragen zu lassen. Falls ein Sensor zur Erfassung eines Zustandes einer Zapfstelle eine Wasserentnahme signalisiert, wird dann immer der erste Grenzwert GW1 durch einen nicht fest, sondern variabel vorgegebenen zweiten Grenzwert GW2 ersetzt, welcher ebenfalls in der elektronischen Steuervorrichtung gespeichert oder zumindest von dieser abfragbar ist. Dabei muss allerdings immer gelten: GW2 > GW1, ansonsten bleibt GW1 gültig.

Bei dem erfindungsgemäßen Verfahren werden ausschließlich Zapfstellen berücksichtigt, die mit einem Sensor ausgestattet sind. Sämtliche anderen Wasserverbraucher bleiben unberücksichtigt.

Zudem wird erfindungsgemäß der zweite Grenzwert GW2 abhängig vom Einsatzort des Sensors gewählt, der eine Wasserentnahme signalisiert. Befindet sich der Sensor an einer Zapfstelle, wo größere Wasserentnahmen vorgesehen sind (z.B. Gartenbewässerung, Dusche, Wasserentnahmen für technische Anwendungen in der Industrie...), so kann der Grenzwert GW2 entsprechend hoch gewählt werden, während an Zapfstellen mit geringen Wasserentnahmen (z.B. Armatur an einem Handwaschbecken) der Grenzwert GW2 entsprechend niedriger gewählt wird.

Mit dem erfindungsgemäßen Verfahren und einer zugehörigen Anordnung wird also sichergestellt, dass eine reguläre Entnahme an einer mit einem Sensor überwachten Zapfstelle als solche erkannt wird, weil ja der entsprechende Sensor an der Ventileinrichtung der Zapfstelle klar das Öffnen des Ventils signalisiert. Da sich solche Ventile in der Regel nicht von selbst öffnen (und zumeist auch nicht von Haustieren wirksam bedient werden können), lässt sich mit an Sicherheit grenzender Wahrscheinlichkeit davon ausgehen, dass eine Bedienungsperson das Ventil geöffnet hat, um -vermutlich regulär- Wasser aus der Zapfstelle zu entnehmen. Daher wird bei Detektion eines Öffnens des Ventils -erfindungsgemäß- in der elektronischen Steuervorrichtung der zunächst niedrige erste Grenzwert GW1 für die maximal zulässige Wasserentnahme auf einen nunmehr höheren zweiten Grenzwert GW2 hochgesetzt. Auf diese Weise wird verhindert, dass die aktuelle, mutmaßlich zulässige Wasserentnahme an der betreffenden Zapfstelle zum vorzeitigen Erreichen des Schließ-Kriteriums führt. Die Gefahr einer ungewollten Absperrung schlimmstenfalls der gesamten Hauswasserinstallation kann damit ausgeschlossen oder zumindest minimiert werden.

Die vorliegende Erfindung schlägt immer dann einen automatischen Wechsel in einen großzügigen Überwachungsmodus vor, wenn nachweislich Wasser gezapft wird. Anschließend erfolgt eine automatische Rückkehr in den strengeren Überwachungsmodus, wenn keine Wasserentnahme mehr an einer der Sensor-überwachten Zapfstellen registriert wird.

Dadurch ergibt sich eine deutlich geringere Gefahr eines versehentlichen Schließens, wenn Wasser gezapft wird.

Man kann beispielsweise nur diejenigen Zapfstellen mit einem Sensor ausstatten, an denen häufige und/oder größere Wasserentnahmen zu erwarten sind. Dies ist deutlich billiger als die Alternative, jede Zapfstelle mit einem Sensor zu versehen, insbesondere bei größeren Objekten mit sehr vielen Zapfstellen.

Zapfstellen ohne Sensor sind normalerweise immer über den strengeren Grenzwert GW1 automatisch höher abgesichert.

### Bevorzugte Ausführungsformen und Varianten der Erfindung

Der Durchflussmesser und das Verschlussorgan in der zentralen Zuleitung müssen nicht notwendig in einem gemeinsamen Gehäuse angeordnet sein. Beispielsweise kann der Durchflussmesser in einer zentralen Wasserenthärtungsanlage positioniert sein, während das Verschlussorgan separat vor der Wasserenthärtungsanlage in der zentralen Zuleitung eingebaut ist.

Als Sensoren können etwa Durchflussmesser eingesetzt werden. Oder die Sensoren erfassen beispielsweise die Ventilzustände "*auf*" bzw. "*zu*" an der betreffenden Zapfstelle. Beispielsweise kann der Durchfluss direkt gemessen werden, etwa mittels Turbinenrad-Durchflussmesser, magnetisch-induktivem Durchflussmesser, Ultraschall-Durchflussmesser und dergleichen. Alternativ kann der Sensor lediglich eine "*auf*/*zu*-Stellung" der Zapfstelle erkennen, etwa über die Betätigung eines Ventils, eine Druckänderung, eine Leitfähigkeitsänderung, eine Temperaturänderung oder ähnliche Indikatoren.

Sensoren können in einem Perlator integriert sein oder anderweitig, etwa als Zwischenstück ausgebildet sein. Ebenso können Sensoren extern direkt an oder zumindest in der Nähe der Zapfstelle angeordnet sein.

Sensoren können energieautark (Energieversorgung mittels Turbine) ausgebildet sein oder werden z.B. mit einer Knopfzelle versorgt.

Ferner können Sensoren mit einer optischen Statusanzeige ausgestaltet sein (z.B. Ampelsystem für die Wasserentnahmedauer oder die entnommene Gesamtwassermenge).

Beispiele für sinnvolle Grenzwerte GW1 und GW2:
GW1:
   maximale Entnahmezeit: 90 s
   maximale Entnahmemenge: 10 l
   maximaler Volumenstrom: 500 l/h
GW2:
   maximale Entnahmezeit: 1 h
   maximale Entnahmemenge: 500 l
   maximaler Volumenstrom: 1500 l/h

Eine Klasse von besonders bevorzugten Ausführungsformen der erfindungsgemäßen Wasserbehandlungsanlage zeichnet sich dadurch aus, dass die Größe des zweiten Grenzwerts GW2 innerhalb eines vorgegebenen Wertebereichs frei wählbar ist.

Damit kann dann individuell auf die Gegebenheiten bei unterschiedlich ausgestalteten Hauswasserinstallationen eingegangen und entsprechend optimale Werte in die elektronische Steuervorrichtung eingegeben werden.

Unterschiedliche Beispiele für den zweiten Grenzwert GW2:
GW2 (Sensor an Küchenarmatur registriert Wasserentnahme):
   maximale Entnahmezeit: 5 min
   maximale Entnahmemenge: 50 l
   maximaler Volumenstrom: 500 l/h
GW2 (Sensor an Gartenarmatur registriert Wasserentnahme):
   maximale Entnahmezeit: 1 h
   maximale Entnahmemenge: 500 l
   maximaler Volumenstrom: 1500 l/h

Bei einer ergänzenden oder dazu alternativen Weiterbildung wird die Größe des zweiten Grenzwert GW2 abhängig vom momentanen Durchfluss oder der zeitlichen Dauer einer ununterbrochenen Wasserentnahme oder vom ohne Unterbrechung gezapften Wasservolumen gewählt.

Weitere Beispiele für den zweiten Grenzwert GW2:
GW2 (Sensor erfasst seit 1 min einen Volumenstrom von 1200 l/h):
   maximale Entnahmezeit: 5 min
   maximale Entnahmemenge: 200 l
   maximaler Volumenstrom: 1500 l/h
GW2 (Sensor erfasst seit 5 min einen Volumenstrom von 120 l/h)
   maximale Entnahmezeit: 15 min
   maximale Entnahmemenge: 50 l
   maximaler Volumenstrom: 500 l/h

Besonders bevorzugt sind auch Ausführungsformen des erfindungsgemäßen Verfahrens, bei welchen der zweite Grenzwert GW2 zeitabhängig ist, insbesondere abhängig von der lokalen Uhrzeit.

Nachts oder während einer Abwesenheit von Personen im Haus (etwa während des Urlaubs) kann der Grenzwert GW2 erniedrigt werden oder ganz ausgesetzt werden, so dass der strengere erste Grenzwert GW1 gilt. Der erste Grenzwert GW1 selbst kann in diesen Phasen ebenfalls erniedrigt werden.

Entsprechende Beispiele für den zweiten Grenzwert GW2:
GW2 (6 Uhr bis 22 Uhr):
   maximale Entnahmezeit: 1 h
   maximale Entnahmemenge: 500 l
   maximaler Volumenstrom: 1500 l/h
GW2 (22 Uhr bis 6 Uhr):
   maximale Entnahmezeit: 2 min
   maximale Entnahmemenge: 20 l
   maximaler Volumenstrom: 500 l/h

In der Praxis wird der zweite Grenzwert GW2 wesentlich größer gewählt als der erste Grenzwert GW1, insbesondere GW2 ≥ 10·GW1, vorzugsweise GW2 ≥ 100·GW1. Theoretisch wird der zweite Grenzwert GW2 derart hochgesetzt, dass er quasi gegen Unendlich strebt.

Registriert nun ein Sensor zur Erfassung des Zustandes einer Zapfstelle eine Wasserentnahme, so wird mit dieser Maßnahme die Überwachung der Hauswasserinstallation ausgesetzt. Dies verhindert, dass eine wirklich gewollte Wasserentnahme versehentlich unterbrochen wird.

Eine weitere Klasse von vorteilhaften Ausführungsformen ist dadurch gekennzeichnet, dass der zweite Grenzwert GW2 entsprechend einem vorgebbaren Verbrauchsprofil einer Zapfstelle mit Sensor für diese Zapfstelle angepasst wird.

Etwa bei häufigen hohen Wasserentnahmen an einer Zapfstelle kann der Grenzwert GW2 nach oben korrigiert werden, insbesondere wenn der Sensor an dieser Zapfstelle eine Wasserentnahme signalisiert ("Lernmodus"). Der erste Grenzwert GW1 kann ebenfalls einem Verbrauchsprofil angepasst werden.

Vorteilhafte Weiterbildungen dieser Klasse von Ausführungsformen zeichnen sich dadurch aus, dass die elektronische Steuervorrichtung in einem Lernmodus das zeitliche Verbrauchsverhalten einer Zapfstelle mit Sensor beobachtet und den zweiten Grenzwert GW2 für diese Zapfstelle automatisch entsprechend anpasst.

Es muss dann also nichts manuell eingestellt oder verstellt werden.

Weitere vorteilhafte Ausführungsformen der Erfindung sind dadurch gekennzeichnet, dass bei gleichzeitiger Erfassung einer Wasserentnahme an mehreren Zapfstellen mit Sensor der zweite Grenzwert GW2 abgeleitet wird aus mindestens einem der Grenzwerte GW2_{einzel}, wobei die Grenzwerte GW2_{einzel} individuell den einzelnen Zapfstellen zugeordnet sind, wenn dort Wasser entnommen wird.

### Beispiele hierfür:

Der zweite Grenzwert GW2 entspricht dem größten Wert der Grenzwerte GW2_{einzel}. Dies ermöglichte eine sichere Überwachung trotz -eventuell sogar simultaner- Wasserentnahme an mehreren Zapfstellen.

Der zweite Grenzwert GW2 bildet die Summe der Grenzwerte GW2_{einzel}. Damit wird ein großzügiger Überwachungsmodus mit weniger strengem Schließkriterium eingestellt. Es besteht mithin nur eine geringe Gefahr, dass das Verschlussorgan schließt und dabei eine gewollte Wasserentnahme unterbrochen wird.

Der zweite Grenzwert GW2 wird mittels einer mathematischen Funktion aus den Grenzwerten GW2_{einzel} abgeleitet, die beispielsweise die einzelnen Grenzwerte GW2_{einzel} und damit die einzelnen Zapfstellen unterschiedlich gewichtet.

Für einen strengeren Überwachungsmodus kann der zweite Grenzwert GW2 dem Mittelwert der Grenzwerte GW2_{einzel} entsprechen, oder es wird sogar der kleinste Wert der Grenzwerte GW2_{einzel} als Grenzwert GW2 festgelegt.

Für spezielle Anwendungsfälle sind Ausführungsformen des erfindungsgemäßen Verfahrens günstig, bei welchen für eine oder mehrere Zapfstellen mit Sensor der erste Grenzwert GW1 in der elektronischen Steuervorrichtung, insbesondere für eine bestimmte Zeitdauer, auf GW1=0 gesetzt wird.

Die Entnahme von Wasser an diesen Zapfstellen ist dann gar nicht möglich. Sobald der Sensor eine Wasserentnahme registriert, schließt das Verschlussorgan in der zentralen Zuleitung.

Die Verweigerung einer Wasserentnahme an einer Zapfstelle kann zeitlich befristet sein. Beispielsweise kann eine Außenarmatur nachts vor einer unbefugten Wasserentnahme geschützt werden.

Wird an mehreren Zapfstellen eine Wasserentnahme registriert, so haben Zapfstellen mit einem ersten Grenzwert GW1>0 Vorrang. Nur wenn an diesen Zapfstellen keine Wasserentnahme registriert wird, kann bei Registrierung einer Wasserentnahme an Zapfstellen, für die ein erster Grenzwert GW1=0 gilt, das Verschlussorgan in der zentralen Zuleitung schließen.

Vorteilhaft sind auch Verfahrensvarianten, die vorsehen, dass bei Überschreiten des ersten Grenzwertes GW1 und/oder bei Überschreiten des zweiten Grenzwertes GW2 an einer Zapfstelle mit Sensor die Wasserentnahme an dieser Zapfstelle unterbrochen wird.

Dazu wird der Sensor an dieser Zapfstelle mit einem Aktor ausgestattet, der bei Überschreiten des ersten Grenzwertes GW1 und/oder bei Überschreiten des zweiten Grenzwertes GW2 die Wasserentnahme an der Zapfstelle unterbricht. Die Zapfstelle kann auf diese Weise individuell geschlossen werden. Der Wasserfluss kann beispielsweise durch eine mechanische Entriegelung später wieder freigegeben werden.

Wie oben erwähnt, kann auch erst nach einer bestimmten Zeit ohne Wasserentnahme zum Grenzwert GW1 gewechselt werden, beispielsweise nach einer Minute. Senden die Sensoren bei Wasserentnahme an den Zapfstellen Signale im Intervall ΔT, so kann nach einer Zeit t > ΔT ohne Signal zum Grenzwert GW1 zurückgekehrt werden.

Bei bevorzugten Ausführungsformen senden daher die Sensoren bei Wasserentnahme an der zugehörigen Zapfstelle Signale in Zeitintervallen der Dauer ΔT an die elektronische Steuervorrichtung und nach einer Zeit t > ΔT ohne Signal wird der zweite Grenzwert GW2 für die entsprechende Zapfstelle automatisch durch den ersten Grenzwert GW1 ersetzt.

In den Rahmen der vorliegenden Erfindung fällt auch eine Hauswasserinstallation, insbesondere eine Wasserbehandlungsanlage, zur Durchführung des oben beschriebenen erfindungsgemäßen Verfahrens, wobei die Hauswasserinstallation umfasst
- eine zentrale Zuleitung für Wasser mit einem Durchflussmesser und einem Verschlussorgan,
- mehrere Zapfstellen, die mittels Ventileinrichtungen jeweils individuell geöffnet oder geschlossen werden können, wobei an mindestens einer Zapfstelle ein Sensor zur Erfassung eines Zustandes der Zapfstelle angeordnet ist,
- eine elektronische Steuervorrichtung, der Messsignale vom Durchflussmesser und dem/den Sensor(en) zugeführt werden können, wobei die elektronische Steuervorrichtung ein Schließen des Verschlussorgans bewirkt, wenn der momentane Durchfluss oder die zeitliche Dauer einer ununterbrochenen Wasserentnahme oder das ohne Unterbrechung gezapfte Wasservolumen einen in der elektronischen Steuervorrichtung gespeicherten oder von der elektronischen Steuervorrichtung abfragbaren ersten Grenzwert GW1 überschreiten. Die Steuervorrichtung ist so ausgestaltet, dass sie den ersten Grenzwert GW1 durch einen in der elektronischen Steuervorrichtung gespeicherten oder von der elektronischen Steuervorrichtung abfragbaren, variabel vorgebbaren zweiten Grenzwert GW2 ersetzt, falls ein Sensor zur Erfassung eines Zustandes einer Zapfstelle eine Wasserentnahme signalisiert, wobei für die Grenzwerte gilt: GW2 > GW1, und dass der zweite Grenzwert GW2 abhängig vom Einsatzort des Sensors, der eine Wasserentnahme signalisiert, gewählt werden kann. Die Hauswasserinstallation zeichnet sich erfindungsgemäß dadurch aus, dass die Steuervorrichtung so ausgestaltet ist, dass der zweite Grenzwert GW2 für eine Zapfstelle durch den ersten Grenzwert

GW1 ersetzt wird, wenn ein Sensor erfasst, dass der aktuelle Zustand der zugehörigen Zapfstelle keine Wasserentnahme signalisiert, beziehungsweise wenn die Ventileinrichtung der Zapfstelle geschlossen ist

Besonders bevorzugt ist eine Variante dieser erfindungsgemäßen Hauswasserinstallation, welche vorsieht, dass mindestens ein Sensor einer Zapfstelle zusätzlich mit einem Aktor ausgestattet ist, der bei Überschreiten des ersten Grenzwertes GW1 und/oder bei Überschreiten des zweiten Grenzwertes GW2 an der Zapfstelle die Wasserentnahme an dieser Zapfstelle unterbricht.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Darstellung einer Ausführungsform der erfindungsgemäßen Hauswasserinstallation mit Überwachung, beispielsweise einer Wasserbehandlungsanlage, bei welcher gerade keine Wasserentnahme stattfindet;
- Fig. 2: eine schematische Darstellung der Hauswasserinstallation nach Fig. 1, bei welcher gerade eine Wasserentnahme an einer Zapfstelle ohne Sensor stattfindet; und
- Fig. 3: eine schematische Darstellung der Hauswasserinstallation nach Fig. 1, bei welcher gerade eine Wasserentnahme an einer Zapfstelle mit Sensor stattfindet.

Die vorliegende Erfindung befasst sich mit dem Gebiet der Hauswasserinstallationen, insbesondere einer Wasserbehandlungsanlage, und betrifft eine neuartige Betriebsweise sowie eine entsprechende Ausgestaltung einer solchen Hauswasserinstallation mit dem Ziel einer Verhinderung oder wenigstens Minimierung von Wasserschäden durch Leckage-Ereignisse.

Die Erfindung bildet ein Verfahren weiter zur Überwachung einer **Hauswasserinstallation 1,** insbesondere einer Wasserbehandlungsanlage, umfassend
- eine **zentrale Zuleitung 2** für Wasser mit einem **Durchflussmesser 5** und einem **Verschlussorgan 6,**
- mehrere **Zapfstellen 8a, 8b, 8c, 8d**, die mittels **Ventileinrichtungen 9a, 9b, 9c, 9d** jeweils individuell geöffnet oder geschlossen werden können, wobei an mindestens einer Zapfstelle 8a, 8b ein **Sensor 10a, 10b** zur Erfassung eines Zustandes der Zapfstelle 8a, 8b angeordnet ist,
- eine **elektronische Steuervorrichtung 7**, der Messsignale vom Durchflussmesser 5 und dem/den Sensor(en) 10a, 10b zugeführt werden, wobei die elektronische Steuervorrichtung 7 ein Schließen des Verschlussorgans 6 bewirkt, wenn der momentane Durchfluss oder die zeitliche Dauer einer ununterbrochenen Wasserentnahme oder das ohne Unterbrechung gezapfte Wasservolumen einen in der elektronischen Steuervorrichtung 7 gespeicherten oder von der elektronischen Steuervorrichtung 7 abfragbaren ersten Grenzwert GW1 überschreiten.

Das erfindungsgemäße Verfahren zeichnet sich gegenüber herkömmlichen Verfahren nach dem Stand der Technik dadurch aus, dass der erste Grenzwert GW1 durch einen in der elektronischen Steuervorrichtung 7 gespeicherten oder von der elektronischen Steuervorrichtung 7 abfragbaren, vorgegebenen zweiten Grenzwert GW2 ersetzt wird, falls ein Sensor 10a, 10b zur Erfassung eines Zustandes einer Zapfstelle 8a, 8b eine Wasserentnahme signalisiert, wobei für die Grenzwerte gilt: GW2 > GW1.

Eine Hauswasserinstallation 1 zur Durchführung des erfindungsgemäßen Verfahrens zeichnet sich gegenüber herkömmlichen Anordnungen nach dem Stand der Technik dadurch aus, dass die Steuervorrichtung 7 so ausgestaltet ist, dass sie den ersten Grenzwert GW1 durch einen in der elektronischen Steuervorrichtung 7 gespeicherten oder von der elektronischen Steuervorrichtung 7 abfragbaren, vorgebbaren zweiten Grenzwert GW2 ersetzt, falls ein Sensor 10a, 10b zur Erfassung eines Zustandes einer Zapfstelle 8a, 8b eine Wasserentnahme signalisiert, wobei für die Grenzwerte gilt: GW2 > GW1.

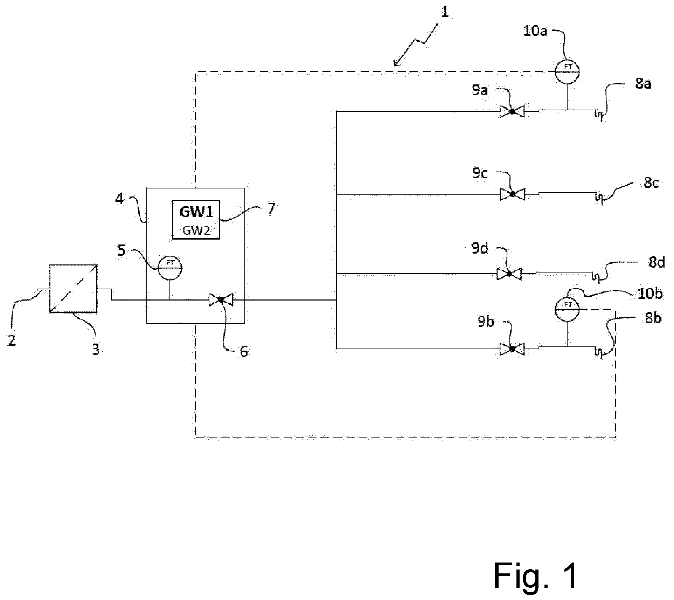

Wie in **Fig. 1** schematisch dargestellt, kann eine solche erfindungsgemäße Hauswasserinstallation mit Überwachung, bei der gerade keine Wasserentnahme stattfindet, in Strömungsrichtung nach der zentralen Wasserzuleitung 2 einen **Schutzfilter 3** umfassen, der die Anlage vor groben Verunreinigungen im Zufluss schützt.

Die angedeutete Speichereinrichtung für die Grenzwerte GW1 und GW1 in der elektronischen Steuervorrichtung 7 kann als wesentlicher Teil einer **Leckageschutzvorrichtung 4** interpretiert werden.

In der in Fig. 1 gezeigten Betriebssituation sind die Ventileinrichtungen 9a, 9b, 9c, 9d an sämtlichen Zapfstellen 8a, 8b, 8c, 8d geschlossen. Daher gilt hier der strengere Grenzwert GW1.

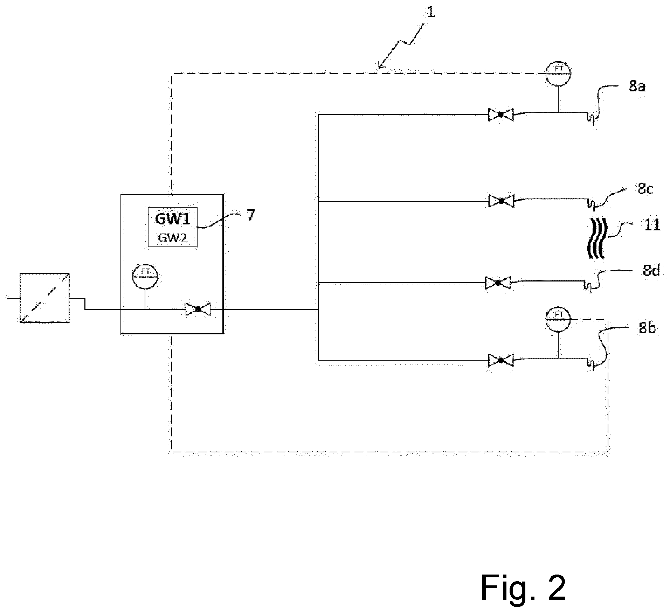

**Fig. 2** zeigt die Hausinstallation 1 aus Fig. 1 in einer Betriebssituation, bei der eine **Wasserentnahme 11 an einer Zapfstelle 8c ohne Sensor** stattfindet.

Da die Wasserentnahme an einer Zapfstelle stattfindet, die nicht über einen Sensor abgesichert ist, gilt auch hier der niedrigere erste Grenzwert GW1 und somit ein strengerer Überwachungsmodus für die Hauswasserinstallation 1.

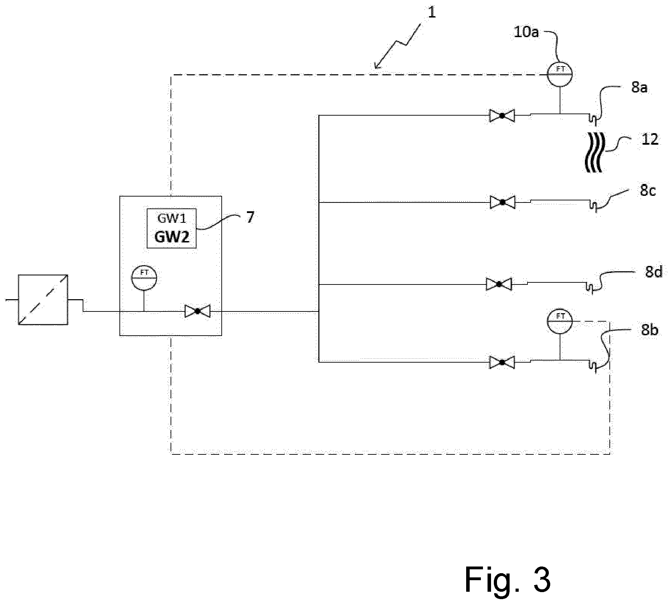

**Fig. 3** schließlich zeigt Hausinstallation 1 aus Fig. 1 in einer Betriebssituation, bei der eine **Wasserentnahme 12 an einer Zapfstelle 8a mit Sensor** 10a stattfindet.

Der Sensor 10a erfasst hierbei die Wasserentnahme 12 an der Zapfstelle 8a, welche beispielsweise für die Gartenbewässerung dient oder als Duscharmatur genutzt wird. Da hier ein bereits größerer Volumenstrom regulär, also in beabsichtigter Weise, entnommen wird, muss erfindungsgemäß der niedrigere erste Grenzwert GW1 durch den höheren zweiten Grenzwert GW2 ersetzt werden. Der durch den zweiten Grenzwert GW2 definierte Überwachungsmodus ist nun weniger streng und berücksichtigt, dass eine beabsichtigte Wasserentnahme stattfindet.

### Bezugszeichenliste

- 1:: Hauswasserinstallation
- 2:: zentrale Zuleitung
- 3:: Schutzfilter
- 4:: Leckageschutzvorrichtung
- 5:: Durchflussmesser
- 6:: Verschlussorgan
- 7:: elektronische Steuervorrichtung mit Speicher für Grenzwerte
- 8a,b:: Zapfstellen mit Sensor
- 8c,d:: Zapfstellen ohne Sensor
- 9a,b,c,d:: Ventileinrichtungen
- 10a,b:: Sensoren
- 11:: Wasserentnahme an einer Zapfstelle ohne Sensor
- 12:: Wasserentnahme an einer Zapfstelle mit Sensor

## Patentansprüche

1. Verfahren zur Überwachung einer Hauswasserinstallation (1), insbesondere einer Wasserbehandlungsanlage, umfassend
- eine zentrale Zuleitung (2) für Wasser mit einem Durchflussmesser (5) und einem Verschlussorgan (6),
- mehrere Zapfstellen (8a, 8b, 8c, 8d), die mittels Ventileinrichtungen (9a, 9b, 9c, 9d) jeweils individuell geöffnet oder geschlossen werden können, wobei an mindestens einer Zapfstelle (8a, 8b) ein Sensor (10a, 10b) zur Erfassung eines Zustandes der Zapfstelle (8a, 8b) angeordnet ist,
- eine elektronische Steuervorrichtung (7), der Messsignale vom Durchflussmesser (5) und dem/den Sensor(en) (10a, 10b) zugeführt werden, wobei die elektronische Steuervorrichtung (7) ein Schließen des Verschlussorgans (6) bewirkt, wenn der momentane Durchfluss oder die zeitliche Dauer einer ununterbrochenen Wasserentnahme oder das ohne Unterbrechung gezapfte Wasservolumen einen in der elektronischen Steuervorrichtung (7) gespeicherten oder von der elektronischen Steuervorrichtung (7) abfragbaren ersten Grenzwert GW1 überschreiten, wobei der erste Grenzwert GW1 durch einen in der elektronischen Steuervorrichtung (7) gespeicherten oder von der elektronischen Steuervorrichtung (7) abfragbaren, variabel vorgegebenen zweiten Grenzwert GW2 ersetzt wird, falls ein Sensor (10a, 10b) zur Erfassung eines Zustandes einer Zapfstelle (8a, 8b) eine Wasserentnahme signalisiert, wobei für die Grenzwerte gilt: GW2 > GW1,
und wobei der zweite Grenzwert GW2 abhängig vom Einsatzort des Sensors (10a, 10b), der eine Wasserentnahme signalisiert, gewählt wird, **dadurch gekennzeichnet,**
**dass** der zweite Grenzwert GW2 für eine Zapfstelle (8a, 8b) durch den ersten Grenzwert GW1 ersetzt wird, wenn ein Sensor (10a, 10b) erfasst, dass der aktuelle Zustand der zugehörigen Zapfstelle (8a, 8b) keine Wasserentnahme signalisiert, beziehungsweise wenn die Ventileinrichtung (9a, 9b) der Zapfstelle (8a, 8b) geschlossen ist.

2. Verfahren nach Anspruch 1, **dadurch gekennzeichnet, dass** die Größe des zweiten Grenzwerts GW2 innerhalb eines vorgegebenen Wertebereichs frei wählbar ist.

3. Verfahren nach einem der vorhergehenden Ansprüche, **dadurch gekennzeichnet, dass** die Größe des zweiten Grenzwert GW2 abhängig vom momentanen Durchfluss oder der zeitlichen Dauer einer ununterbrochenen Wasserentnahme oder vom ohne Unterbrechung gezapften Wasservolumen gewählt wird.

4. Verfahren nach einem der vorhergehenden Ansprüche, **dadurch gekennzeichnet, dass** der zweite Grenzwert GW2 zeitabhängig ist, insbesondere abhängig von der lokalen Uhrzeit.

5. Verfahren nach einem der vorhergehenden Ansprüche, **dadurch gekennzeichnet, dass** der zweite Grenzwert GW2 wesentlich größer ist als der erste Grenzwert GW1, insbesondere GW2 ≥ 10 GW1, vorzugsweise GW2 ≥ 100·GW1.

6. Verfahren nach einem der vorhergehenden Ansprüche, **dadurch gekennzeichnet, dass** der zweite Grenzwert GW2 entsprechend einem vorgebbaren Verbrauchsprofil einer Zapfstelle (8a, 8b) mit Sensor (10a, 10b) für diese Zapfstelle (8a, 8b) angepasst wird.

7. Verfahren nach Anspruch 6, **dadurch gekennzeichnet, dass** die elektronische Steuervorrichtung (7) in einem Lernmodus das zeitliche Verbrauchsverhalten einer Zapfstelle (8a, 8b) mit Sensor (10a, 10b) beobachtet und den zweiten Grenzwert GW2 für diese Zapfstelle (8a, 8b) automatisch entsprechend anpasst.

8. Verfahren nach einem der vorhergehenden Ansprüche, **dadurch gekennzeichnet, dass** bei gleichzeitiger Erfassung einer Wasserentnahme an mehreren Zapfstellen (8a, 8b) mit Sensor (10a, 10b) der zweite Grenzwert GW2 abgeleitet wird aus mindestens einem der Grenzwerte GW2_{einzel}, wobei die Grenzwerte GW2_{einzel} individuell den einzelnen Zapfstellen (8a, 8b) zugeordnet sind, wenn dort Wasser entnommen wird.

9. Verfahren nach einem der vorhergehenden Ansprüche, **dadurch gekennzeichnet, dass** für eine oder mehrere Zapfstellen (8a, 8b) mit Sensor (10a, 10b) der erste Grenzwert GW1 in der elektronischen Steuervorrichtung (7), insbesondere für eine bestimmte Zeitdauer, auf GW1=0 gesetzt wird.

10. Verfahren nach einem der vorhergehenden Ansprüche, **dadurch gekennzeichnet, dass** bei Überschreiten des ersten Grenzwertes GW1 und/oder bei Überschreiten des zweiten Grenzwertes GW2 an einer Zapfstelle (8a, 8b) mit Sensor (10a, 10b) die Wasserentnahme an dieser Zapfstelle (8a, 8b) unterbrochen wird.

11. Verfahren nach einem der vorhergehenden Ansprüche, **dadurch gekennzeichnet, dass** die Sensoren (10a, 10b) bei Wasserentnahme an der zugehörigen Zapfstelle (8a, 8b) Signale in Zeitintervallen der Dauer ΔT an die elektronische Steuervorrichtung (7) senden, und dass nach einer Zeit t > ΔT ohne Signal der zweite Grenzwert GW2 für die entsprechende Zapfstelle (8a, 8b) automatisch durch den ersten Grenzwert GW1 ersetzt wird.

12. Hauswasserinstallation (1), insbesondere Wasserbehandlungsanlage, zur Durchführung des Verfahrens nach einem der Ansprüche 1 bis 11, wobei die Hauswasserinstallation umfasst
- eine zentrale Zuleitung (2) für Wasser mit einem Durchflussmesser (5) und einem Verschlussorgan (6),
- mehrere Zapfstellen (8a, 8b, 8c, 8d), die mittels Ventileinrichtungen (9a, 9b, 9c, 9d) jeweils individuell geöffnet oder geschlossen werden können, wobei an mindestens einer Zapfstelle (8a, 8b) ein Sensor (10a, 10b) zur Erfassung eines Zustandes der Zapfstelle (8a, 8b) angeordnet ist,
- eine elektronische Steuervorrichtung (7), der Messsignale vom Durchflussmesser (5) und dem/den Sensor(en) (10a, 10b) zugeführt werden können, wobei die elektronische Steuervorrichtung (7) ein Schließen des Verschlussorgans (6) bewirkt, wenn der momentane Durchfluss oder die zeitliche Dauer einer ununterbrochenen Wasserentnahme oder das ohne Unterbrechung gezapfte Wasservolumen einen in der elektronischen Steuervorrichtung (7) gespeicherten oder von der elektronischen Steuervorrichtung (7) abfragbaren ersten Grenzwert GW1 überschreiten,
wobei die Steuervorrichtung (7) so ausgestaltet ist, dass sie den ersten Grenzwert GW1 durch einen in der elektronischen Steuervorrichtung (7) gespeicherten oder von der elektronischen Steuervorrichtung (7) abfragbaren, variabel vorgebbaren zweiten Grenzwert GW2 ersetzt, falls ein Sensor (10a, 10b) zur Erfassung eines Zustandes einer Zapfstelle (8a, 8b) eine Wasserentnahme signalisiert, wobei für die Grenzwerte gilt: GW2 > GW1,
und wobei der zweite Grenzwert GW2 abhängig vom Einsatzort des Sensors (10a, 10b), der eine Wasserentnahme signalisiert, gewählt werden kann,
**dadurch gekennzeichnet,**
**dass** die Steuervorrichtung (7) so ausgestaltet ist, dass der zweite Grenzwert GW2 für eine Zapfstelle (8a, 8b) durch den ersten Grenzwert GW1 ersetzt wird, wenn ein Sensor (10a, 10b) erfasst, dass der aktuelle Zustand der zugehörigen Zapfstelle (8a, 8b) keine Wasserentnahme signalisiert, beziehungsweise wenn die Ventileinrichtung (9a, 9b) der Zapfstelle (8a, 8b) geschlossen ist.

13. Hauswasserinstallation (1) nach Anspruch 12, **dadurch gekennzeichnet, dass** mindestens ein Sensor (10a, 10b) einer Zapfstelle (8a, 8b) zusätzlich mit einem Aktor ausgestattet ist, der bei Überschreiten des ersten Grenzwertes GW1 und/oder bei Überschreiten des zweiten Grenzwertes GW2 an der Zapfstelle (8a, 8b) die Wasserentnahme an dieser Zapfstelle (8a, 8b) unterbricht.

## Claims

1. Method for monitoring a domestic water installation (1), in particular a water treatment system, comprising
- a central supply line (2) for water with a flow meter (5) and a closure element (6),
- a plurality of tapping points (8a, 8b, 8c, 8d) which can each be opened or closed individually by means of valve devices (9a, 9b, 9c, 9d), wherein on at least one tapping point (8a, 8b) a sensor (10a, 10b) for detecting a state of the tapping point (8a, 8b) is arranged,
- an electronic control device (7) to which measurement signals from the flow meter (5) and the sensor(s) (10a, 10b) are fed, wherein the electronic control device (7) causes the closure element (6) to close when the instantaneous flow rate or the time duration of an uninterrupted water withdrawal or the water volume tapped without interruption exceed a first limit value GW1 which is stored in the electronic control device (7) or can be queried by the electronic control device (7),
wherein the first limit value GW1 is replaced by a second variably predetermined limit value GW2 which is stored in the electronic control device (7) or can be queried by the electronic control device (7) if a sensor (10a, 10b) for detecting a state of a tapping point (8a, 8b) signals a water withdrawal, wherein the following applies to the limit values: GW2 > GW1, and wherein the second limit value GW2 is selected in dependence on the location of use of the sensor (10a, 10b) which signals a water withdrawal,
**characterized in that**
the second limit value GW2 for a tapping point (8a, 8b) is replaced by the first limit value GW1 if a sensor (10a, 10b) detects that the current state of the associated tapping point (8a, 8b) does not signal a water withdrawal, or when the valve device (9a, 9b) of the tapping point (8a, 8b) is closed.

2. Method according to claim 1, **characterized in that** the magnitude of the second limit value GW2 is freely selectable within a predetermined range of values.

3. Method according to any one of the preceding claims, **characterized in that** the magnitude of the second limit value GW2 is selected in dependence on the instantaneous flow rate or the time duration of an uninterrupted water withdrawal or on the water volume tapped without interruption.

4. Method according to any one of the preceding claims, **characterized in that** the second limit value GW2 is time-dependent, in particular dependent on the local time of day.

5. Method according to any one of the preceding claims, **characterized in that** the second limit value GW2 is substantially greater than the first limit value GW1, in particular GW2 ≥ 10·GW1, preferably GW2 ≥ 100·GW1.

6. Method according to any one of the preceding claims, **characterized in that** the second limit value GW2 is adapted according to a predeterminable consumption profile of a tapping point (8a, 8b) with sensor (10a, 10b) for this tapping point (8a, 8b).

7. Method according to claim 6, **characterized in that** the electronic control device (7) observes the temporal consumption behaviour of a tapping point (8a, 8b) with sensor (10a, 10b) in a learning mode and automatically correspondingly adjusts the second limit value GW2 for this tapping point (8a, 8b).

8. Method according to any one of the preceding claims, **characterized in that**, in the case of simultaneous detection of a water withdrawal at a plurality of tapping points (8a, 8b) with sensor (10a, 10b), the second limit value GW2 is derived from at least one of the limit values GW2_{einzel}, wherein the limit values GW2_{einzel} are individually associated with the individual tapping points (8a, 8b) when water is withdrawn there.

9. Method according to any one of the preceding claims, **characterized in that** for one or more tapping points (8a, 8b) with sensor (10a, 10b) the first limit value GW1 is set to GW1=0 in the electronic control device (7), in particular for a specific period of time.

10. Method according to any one of the preceding claims, **characterized in that** when the first limit value GW1 is exceeded and/or when the second limit value GW2 is exceeded at a tapping point (8a, 8b) with sensor (10a, 10b), the water withdrawal at this tapping point (8a, 8b) is interrupted.

11. Method according to any one of the preceding claims, **characterized in that** when water is withdrawn at the associated tapping point (8a, 8b), the sensors (10a, 10b) send signals at time intervals of duration ΔT to the electronic control device (7) and that after a time t > ΔT without signal, the second limit value GW2 for the corresponding tapping point (8a, 8b) is automatically replaced by the first limit value GW1.

12. Domestic water installation (1), in particular water treatment installation, for carrying out the method according to any one of claims 1 to 11, wherein the domestic water installation comprises
- a central supply line (2) for water with a flow meter (5) and a closure element (6),
- a plurality of tapping points (8a, 8b, 8c, 8d) which can be individually opened or closed by means of valve means (9a, 9b, 9c, 9d), wherein on at least one tapping point (8a, 8b) a sensor (10a, 10b) is arranged for detecting a state of the tapping point (8a, 8b),
- an electronic control device (7), to which measurement signals can be supplied from the flow meter (5) and the sensor(s) (10a, 10b), the electronic control device (7) causing the closure element (6) to close when the instantaneous flow rate or the time duration of uninterrupted water withdrawal or the volume of water tapped without interruption exceed a first limit value GW1 which is stored in the electronic control device (7) or which can be queried by the electronic control device (7),
wherein the control device (7) is designed in such a way that it replaces the first limit value GW1 by a variably predeterminable second limit value GW2, which is stored in the electronic control device (7) or can be queried by the electronic control device (7), if a sensor (10a, 10b) for detecting a state of a tapping point (8a, 8b) signals a water withdrawal, where the following applies to the limit values: GW2 >GW1,
and wherein the second limit value GW2 can be selected in dependence on the location of use of the sensor (10a, 10b), which signals a water withdrawal, **characterized in that**
the control device (7) is configured in such a way that the second limit value GW2 for a tapping point (8a, 8b) is replaced by the first limit value GW1 if a sensor (10a, 10b) detects that the current state of the associated tapping point (8a, 8b) does not signal a water withdrawal, or if the valve device (9a, 9b) of the tapping point (8a, 8b) is closed.

13. Domestic water installation (1) according to claim 12, **characterized in that** at least one sensor (10a, 10b) of a tapping point (8a, 8b) is additionally equipped with an actuator which, when the first limit value GW1 is exceeded and/or when the second limit value GW2 is exceeded at the tapping point (8a, 8b), interrupts the water withdrawal at this tapping point (8a, 8b).

## Revendications

1. Procédé de surveillance d'une installation d'eau domestique (1), en particulier d'un agencement de traitement des eaux, comprenant
- une conduite centrale (2) d'arrivée d'eau, munie d'un débitmètre (5) et d'un organe d'obturation (6),
- plusieurs points de puisage (8a, 8b, 8c, 8d) pouvant être respectivement ouverts ou fermés en mode individuel, au moyen d'appareils de distribution (9a, 9b, 9c, 9d), un capteur (10a, 10b) étant implanté en au moins un point de puisage (8a, 8b), en vue de détecter un état dudit point de puisage (8a, 8b),
- un dispositif de commande électronique (7) auquel sont délivrés des signaux de mesure émanant du débitmètre (5) et du/des capteur(s) (10a, 10b), lequel dispositif de commande électronique (7) provoque une fermeture de l'organe d'obturation (6) lorsque le débit instantané ou la durée d'un prélèvement d'eau ininterrompu, voire le volume d'eau puisé sans interruption, excède(nt) une première valeur limite GW1 mémorisée dans le dispositif de commande électronique (7) ou pouvant être interrogée par ledit dispositif de commande électronique (7),
laquelle première valeur limite GW1 est remplacée par une seconde valeur limite GW2 préétablie de manière variable, mémorisée dans le dispositif de commande électronique (7) ou pouvant être interrogée par ledit dispositif de commande électronique (7), dans le cas où un capteur (10a, 10b), dévolu à la détection d'un état d'un point de puisage (8a, 8b), signale un prélèvement d'eau, sachant que lesdites valeurs limites obéissent à la relation GW2 > GW1,
et sachant que la seconde valeur limite GW2 est sélectionnée en fonction du lieu d'utilisation dudit capteur (10a, 10b) signalant un prélèvement d'eau,
**caractérisé par le fait**
**que** la seconde valeur limite GW2, affectée à un point de puisage (8a, 8b), est remplacée par la première valeur limite GW1 lorsqu'un capteur (10a, 10b) détecte que l'état factuel du point de puisage (8a, 8b) associé ne signale aucun prélèvement d'eau, respectivement lorsque l'appareil de distribution (9a, 9b) dudit point de puisage (8a, 8b) est fermé.

2. Procédé selon la revendication 1, **caractérisé par le fait que** la grandeur de la seconde valeur limite GW2 peut être sélectionnée librement au sein d'une plage de valeurs préétablie.

3. Procédé selon l'une des revendications précédentes, **caractérisé par le fait que** la grandeur de la seconde valeur limite GW2 est sélectionnée en fonction du débit instantané ou de la durée d'un prélèvement d'eau ininterrompu, voire du volume d'eau puisé sans interruption.

4. Procédé selon l'une des revendications précédentes, **caractérisé par le fait que** la seconde valeur limite GW2 est tributaire du temps, notamment dépendante de l'heure locale.

5. Procédé selon l'une des revendications précédentes, **caractérisé par le fait que** la seconde valeur limite GW2 est notablement supérieure à la première valeur limite GW1, en particulier GW2 ≥ 10 GW1, de préférence GW2 ≥ 100 GW1.

6. Procédé selon l'une des revendications précédentes, **caractérisé par le fait que** la seconde valeur limite GW2 est adaptée en correspondance avec un profil de consommation pouvant être préétabli pour un point de puisage (8a, 8b) muni d'un capteur (10a, 10b) dévolu à ce point de puisage (8a, 8b).

7. Procédé selon la revendication 6, **caractérisé par le fait que** le dispositif de commande électronique (7) observe, en mode apprentissage, le comportement de consommation dans le temps d'un point de puisage (8a, 8b) muni d'un capteur (10a, 10b) et adapte automatiquement, en conséquence, la seconde valeur limite GW2 affectée à ce point de puisage (8a, 8b).

8. Procédé selon l'une des revendications précédentes, **caractérisé par le fait qu'**en cas de détection concomitante d'un prélèvement d'eau en plusieurs points de puisage (8a, 8b) munis d'un capteur (10a, 10b), la seconde valeur limite GW2 est dérivée d'au moins l'une des valeurs limites GW2_{einzel}, lesquelles valeurs limites GW2einzei sont attribuées individuellement aux points individuels de puisage (8a, 8b) lorsque de l'eau y est prélevée.

9. Procédé selon l'une des revendications précédentes, **caractérisé par le fait que** la première valeur limite GW1 est établie à GW1 = 0, dans le dispositif de commande électronique (7), notamment pour une durée déterminée concernant un ou plusieurs point(s) de puisage (8a, 8b) muni(s) d'un capteur (10a, 10b).

10. Procédé selon l'une des revendications précédentes, **caractérisé par le fait qu'**en cas de dépassement de la première valeur limite GW1 et/ou en cas de dépassement de la seconde valeur limite GW2, en un point de puisage (8a, 8b) muni d'un capteur (10a, 10b), le prélèvement d'eau à ce point de puisage (8a, 8b) est interrompu.

11. Procédé selon l'une des revendications précédentes, **caractérisé par le fait qu'**en cas de prélèvement d'eau au point de puisage (8a, 8b) associé, les capteurs (10a, 10b) adressent des signaux au dispositif de commande électronique (7), à des intervalles de temps de durée ΔT ; et **par le fait que** la seconde valeur limite GW2, affectée au point de puisage (8a, 8b) correspondant, est automatiquement remplacée par la première valeur limite GW1 à l'issue d'un temps t > ΔT exempt de signal.

12. Installation d'eau domestique (1), notamment agencement de traitement des eaux destiné(e) à la mise en oeuvre du procédé conforme à l'une des revendications 1 à 11, ladite installation d'eau domestique comprenant
- une conduite centrale (2) d'arrivée d'eau, munie d'un débitmètre (5) et d'un organe d'obturation (6),
- plusieurs points de puisage (8a, 8b, 8c, 8d) pouvant être respectivement ouverts ou fermés en mode individuel, au moyen d'appareils de distribution (9a, 9b, 9c, 9d), un capteur (10a, 10b) étant implanté en au moins un point de puisage (8a, 8b), en vue de détecter un état dudit point de puisage (8a, 8b),
- un dispositif de commande électronique (7) auquel peuvent être délivrés des signaux de mesure émanant du débitmètre (5) et du/des capteur(s) (10a, 10b), lequel dispositif de commande électronique (7) provoque une fermeture de l'organe d'obturation (6) lorsque le débit instantané ou la durée d'un prélèvement d'eau ininterrompu, voire le volume d'eau puisé sans interruption, excède(nt) une première valeur limite GW1 mémorisée dans le dispositif de commande électronique (7) ou pouvant être interrogée par ledit dispositif de commande électronique (7),
sachant que ledit dispositif de commande (7) est conçu de telle sorte qu'il remplace ladite première valeur limite GW1 par une seconde valeur limite GW2 pouvant être préétablie de manière variable, mémorisée dans le dispositif de commande électronique (7) ou pouvant être interrogée par ledit dispositif de commande électronique (7), dans le cas où un capteur (10a, 10b), dévolu à la détection d'un état d'un point de puisage (8a, 8b), signale un prélèvement d'eau, sachant que lesdites valeurs limites obéissent à la relation GW2 > GW1,
et sachant que la seconde valeur limite GW2 peut être sélectionnée en fonction du lieu d'utilisation dudit capteur (10a, 10b) signalant un prélèvement d'eau,
**caractérisée par le fait**
**que** le dispositif de commande (7) est conçu de façon telle que la seconde valeur limite GW2, affectée à un point de puisage (8a, 8b), soit remplacée par la première valeur limite GW1 lorsqu'un capteur (10a, 10b) détecte que l'état factuel du point de puisage (8a, 8b) associé ne signale aucun prélèvement d'eau, respectivement lorsque l'appareil de distribution (9a, 9b) dudit point de puisage (8a, 8b) est fermé.

13. Installation d'eau domestique (1) selon la revendication 12, **caractérisée par le fait qu'**au moins un capteur (10a, 10b) d'un point de puisage (8a, 8b) est additionnellement pourvu d'un actionneur qui, en cas de dépassement de la première valeur limite GW1 et/ou en cas de dépassement de la seconde valeur limite GW2 audit point de puisage (8a, 8b), interrompt le prélèvement d'eau à ce point de puisage (8a, 8b).
